# EUROPEAN PATENT APPLICATION

(11) **EP 2 860 393 A1**
(43) Date of publication of application: **15.04.2015**
(21) Application number: 14181279.2
(22) Date of filing: 18.08.2014
(51) Int. Cl.: F03D 7/02, F03D 1/06

(54) **Reverse flow load mitigation device for a wind turbine blade**

(30) Priority: 08.10.2013 US 201314048106
(71) Applicant: Siemens Aktiengesellschaft, 80333 München (DE)
(72) Inventor: Dixon, Kristian R., Boulder, CO Colorado 80304 (US); Mayda, Edward A., Thornton, CO Colorado 80602 (US)

(57) **Abstract**

A reverse wind load mitigation device (30) is provided for a wind turbine blade (20). The device (30) comprises a hinge member (32) attachable to a trailing edge (26) of a wind turbine blade (20). The separated flow inducer (34) is associated with the hinge member (32) and is configured to pivot about or with the hinge member (32) toward at least one of the surfaces (40, 42) in response to wind (45) traveling from a direction of the trailing edge (28). The separated flow inducer (34) is effective to induce flow separation (50) over at least one of the surfaces (40, 42).

## Description

### FIELD OF THE INVENTION

The present invention relates to wind turbines, and more particularly to devices, systems and methods for reducing aerodynamic loads on wind turbine blades during reverse flow conditions.

### BACKGROUND OF THE INVENTION

Wind turbines are known in the art for transforming wind energy into mechanical energy and eventually, electrical energy. Typically, wind turbines include a rotor having a plurality of rotor blades mounted thereon; a drive train and a generator housed in a nacelle; and a tower. The nacelle and the rotor are typically mounted on top of the tower. In operation, the plurality of blades of the rotor receive energy from the wind and convert the wind energy into a rotational torque that is used to drive the generator, which is rotationally coupled to the rotor through the drive train. To accomplish this, the cross-sectional profile of a wind turbine blade comprises an airfoil cross-section that is designed for airflow to travel from its leading edge to its trailing edge.

The airfoil cross-section is curved such that wind flowing from its leading edge will travel at different velocities over each curved surface, creating a pressure differential that causes the turbine blade to rotate. The pressure differential is created by an air flow that smoothly adheres to the contour of the airfoil. Under normal conditions, the air flow travels over the wind turbine blades from a leading edge to a trailing edge over the blades. At times, however, in storms and other conditions, it is possible for the air flow to reverse direction and travel from the trailing edge of the blade toward its leading edge. In such cases, aerodynamic loads may be generated by the blade, which are harmful to the blade and other turbine components.

### BRIEF DESCRIPTION OF THE DRAWINGS

The invention is explained in the following description in view of the drawings that show:
FIG. 1 illustrates a wind turbine having three rotor blades, each having a reverse wind load mitigation device in accordance with an aspect of the present invention.
FIG. 2A is a cross-sectional view of a rotor blade of FIG. 1 taken at line 2-2 having a reverse wind load mitigation device in a first (deactivated) position under normal wind conditions.
FIG. 2B is a cross-sectional view of a rotor blade of FIG. 1 taken at line 2-2 having a reverse wind load litigation device in a second (deployed) position in response to reverse wind conditions.
FIG. 3 is a top view of the reverse wind load mitigation device of FIGS. 2A-2B.
FIG. 4 is a cross-sectional view of a rotor blade having a reverse wind load mitigation device comprising an elastomeric hinge member and a separated flow inducer in accordance with another aspect of the present invention.
FIG. 5 is a cross-sectional view of a rotor blade having a separated flow inducer configured to pivot at least about 75 degrees in accordance with an aspect of the present invention.
FIG. 6 is a cross-sectional view of a rotor blade having a separated flow inducer configured to pivot at least about 90 degrees in accordance with an aspect of the present invention.
FIG. 7 is a cross-sectional view of a reverse wind load mitigation device having a stop member in accordance with an aspect of the present invention.
FIG. 8 is a perspective view of a reverse wind load mitigation device also comprising a noise reduction member in accordance with an aspect of the present invention.
FIG. 9 is a perspective view of a reverse wind load mitigation device comprising a plurality of segments in accordance with an aspect of the present invention.

### DETAILED DESCRIPTION OF THE INVENTION

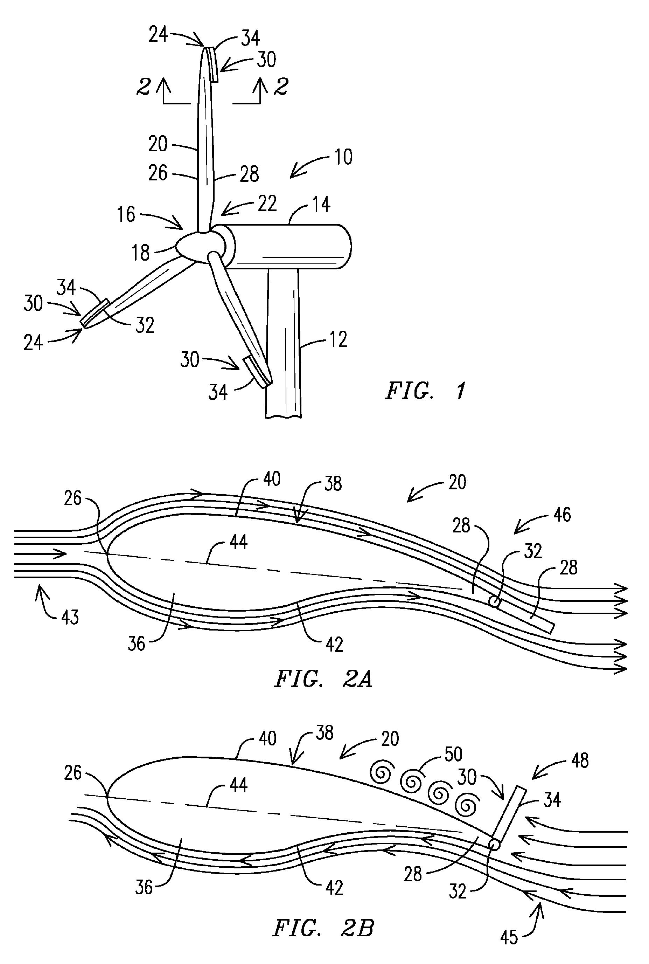

Referring to the figures, FIG. 1 illustrates a wind turbine 10 having a tower 12, a nacelle 14 mounted on the tower 12, and a rotor 16 having a hub 18 and a plurality of rotor blades 20 thereon. The rotor blade 20 includes a root region 22 and a tip region 24 that defines the outermost part of the blade 20. The rotor blade 20 further includes a leading edge 26 and a trailing edge 28. The rotor blades 20 each comprise thereon a reverse wind load mitigation device 30 having a hinge member 32 and a separated flow inducer 34 as described in further detail below. A shell body 36 extends between the leading edge 26 and the trailing edge 28 and forms an airfoil shape in cross-section (airfoil) 38 there between as shown in FIG. 2. The airfoil 38 comprises a first surface 40 and a second surface 42. The first surface 40 and the second surface 42 are disposed between the leading edge 26 and the trailing edge 28 and define the airfoil 38. Typically, the first surface 40 is referred to as the suction surface of the blade 20 and the second surface 42 is referred to as the pressure surface of the blade 20. The dashed-dotted line extending from the leading edge 26 of the rotor blade 20 to its trailing edge 28 represents the chord line 44 of the rotor blade 20, which extends in a chordwise direction. A span-wise length of the blade 20 is perpendicular to the chordwise direction and is measured from the hub 18 to the blade tip 24.

In the desired situation under normal operating conditions, as shown in FIG. 2A, the wind turbine 10 is optimally positioned in the direction of the wind such that an air flow 43 travels over the blades 20 from the leading edge 26 to the trailing edge 28 generating an amount of lift to rotate the blades 20. As mentioned above, the rotational energy is used to drive a generator, which is rotationally coupled to the rotor through a drive train. In contrast to the desired situation, there may be periods of time where the wind is dormant, where air flow does not adequately travel from the leading edge to the trailing edge, and where the wind changes direction rapidly. In such instances, it is appreciated that air flow may reverse direction as shown by arrow 45 in FIG. 2B and instead flow from the trailing edge 28 to the leading edge 26. It is appreciated that, in such instances, the reverse air flow 45 may place undesired aerodynamic loads on the blades. Aspects of the present invention advantageously provide devices and methods for alleviating aerodynamic loading on the blades 20 during such reverse wind conditions by inducing an amount of turbulence and/or flow separation over a blade surface, e.g., one of surfaces 40 or 42.

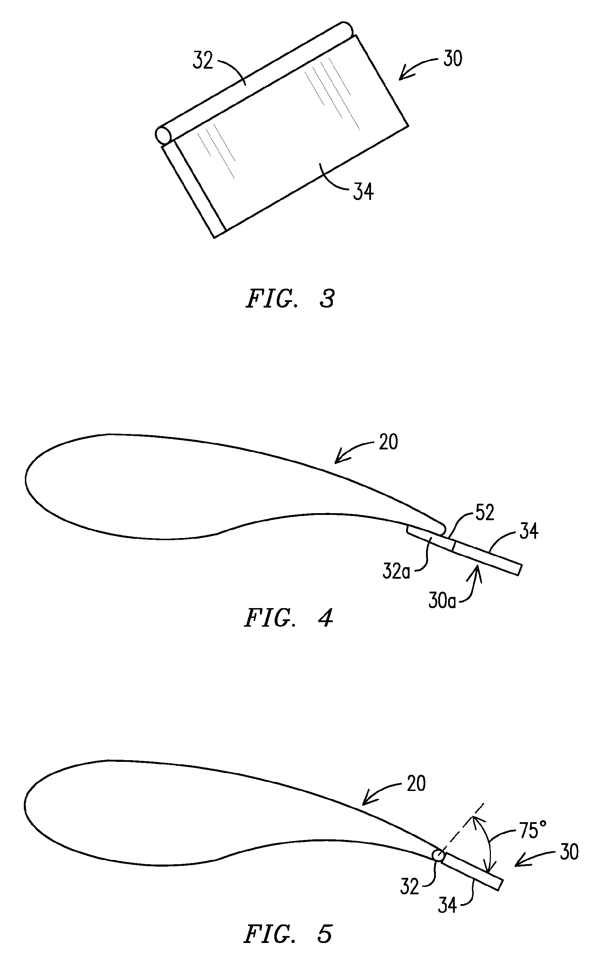

Referring again to FIG. 2A-2B, there is shown a reverse wind load mitigation device 30 comprising a hinge member 32 attachable to the trailing edge 28 and a separated flow inducer 34 associated with the hinge member 32. FIG. 3 is a top view of a section of a blade 20 shown in FIGS. 2A-2B having a noise and load reduction device 30 comprising a hinge member 32 and a separated flow inducer 34 mounted thereon. The separated flow inducer 34 is configured to pivot about or with the hinge member 32 from a first (deactivated) position 46 as shown in FIG. 2A toward at least one of the surfaces 40, 42 and to a second (deployed) position 48 as shown in FIG. 2B in response to wind traveling from a direction of the trailing edge 28. In the second position 48, the separated flow inducer 46 is effective to create an amount of flow separation 50 on a corresponding one of the surfaces 40, 42 of the blade 20, thereby reducing aerodynamic loads on the blade 20. In certain embodiments, the separated flow 50 on the surfaces 40, 42 is effective to also create an amount of turbulence accompanying the flow separation,

The hinge member 32 may be any suitable structure configured to allow movement of the separated flow inducer 34 about or with the hinge member 32 from a first (deactivated) position 46 as shown in FIG. 2A to a second (deployed) position 48 as shown in FIG. 2B. The hinge member 32 may be secured to the body 36 of the blade 20 by any suitable structure, such as adhesive, heat sealing, fusing, fasteners, e.g., nuts and bolts, and the like, at or adjacent the trailing edge 28 of the blade 20. The separated flow inducer 34 may also be associated with a body of the hinge member 32 by any suitable structure, such as fasteners or an adhesive, or may be integrally formed with the separated flow inducer 34 during manufacture. The reverse wind load mitigation device 30 comprising the hinge member 32 and the separated flow inducer 34 may extend along a desired span-wise length of the blade 20 along the trailing edge 28. In one embodiment, the hinge member 32 and the separated flow inducer 34 are disposed in an outboard region of the blade from or adjacent the tip 24 of the blade 20 (shown in FIG. 1) and extend toward an inboard region of the blade 20. In a particular embodiment, the hinge member 32 and the separated flow inducer 34 are disposed along a length that is from about 15 to about 85 percent of the span-wise length of the blade 20.

In one embodiment, as was shown in FIGS. 2A-2B, the hinge member 32 comprises a mechanical hinge as is well-known in the art. For example, the hinge member 32 may comprise a spring-loaded hinge (not shown) as is known in the art that utilizes a spring loaded action to move between the first position 46 and the second (deployed) position 48. When in the form of a spring-loaded hinge, the hinge member 32 is configured to have increased tension when the hinge member 32 is in the first (deactivated) position 46. In this way, the likelihood of the hinge member 32 fluttering during normal intended operation of the wind turbine 10 is reduced. In other embodiments, the hinge member 32 may comprise a damping or friction hinge as are known in the art. Exemplary hinge structures are set forth in U.S. Published Patent Application No. 200600272129 and U.S. Patent Nos. 8,375,518; 7,836,550; 6,665,907; 6,195,431, 5,464,083; and 4,829,628, the entirety of which are incorporated by reference herein.

In further embodiments, as shown in FIG. 4, there is shown another embodiment of a reverse load mitigation device 32a comprising an elastomeric hinge member 32a and a separated flow inducer 34. In the embodiment shown, the hinge member 32a comprises an elastomeric material 52 that is of such a thickness, width, and/or length that the separated flow inducer 34 is configured to pivot in response to wind 43 from the reverse direction to create an amount of turbulence 50 over a respective blade surface 40, 42. The elastomeric material 52 may be any suitable material, such as polyurethane, polyethylene, polystyrene, polyvinyl chloride, polytetrafluoroethylene (PTFE), or a material having a combination thereof.

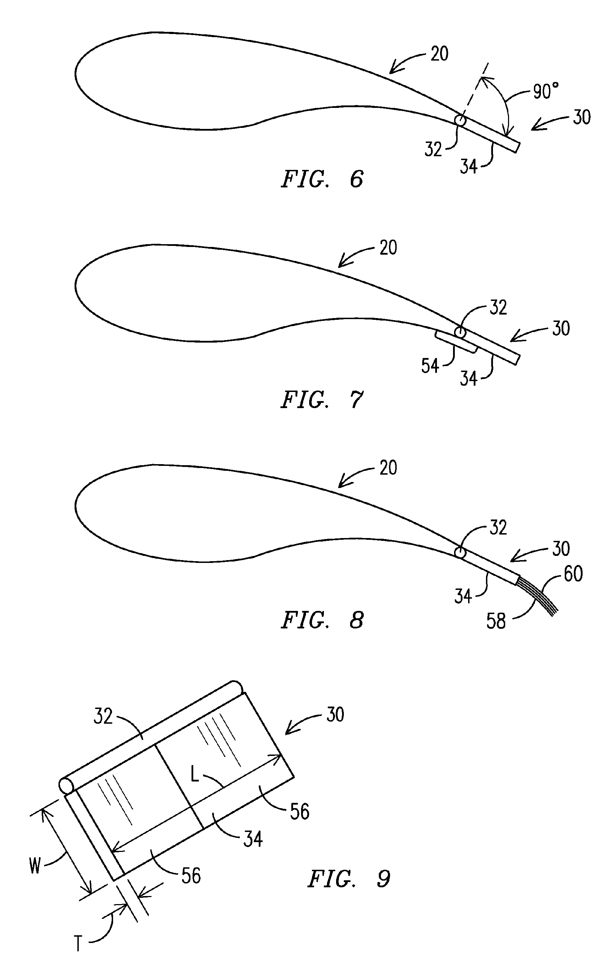

The separated flow inducer 34 may be of any suitable shape, length, width, and thickness effective to create the desired flow separation 50 as described herein. In certain embodiments, the separated flow inducer comprises a flap having a substantially rectangular shape and profile as was shown in FIG. 3. In other embodiments, the separated flow inducer 34 may have a relatively tapered or aerodynamic shape. Typically, as shown in FIG. 9, the separated flow inducer 34 has a longest length (L) that extends along a span-wise length of the blade for the same or about the same extent as the hinge member 32. In a particular embodiment, the separated flow inducer 34 is disposed along a length (L) that is from about 15 to about 85 percent of the span-wise length of the blade 20, such as about 30 percent of the span-wise length of the blade 20. The width (W) of the separated flow inducer 34 (transverse to the longest longitudinal length) is such that the separated flow inducer 34 extends from the trailing edge 28 and from the hinge member 32. Typically, the greater the width (W) of the separated flow inducer 34, the greater the flow separation 50 induced. In certain embodiments, the separated flow inducer 34 has a width of from about 5 to about 30 cm. The thickness (T) of the separated flow inducer 34 is preferably such that the separated flow inducer 34 does not substantially interfere with air flow 43 under normal conditions when air travels over the blade 20 from the leading edge 26 as was shown in FIG. 2A. In one embodiment, the separated flow inducer 34 has a thickness (T) of from about 0.1 to about 2 cm.

In certain embodiments, the separated flow inducer 34 comprises a rigid member. By "rigid," it is meant that the separated flow inducer 34 is of a material, size, and/or shape such that the member does not generally compress, flex, or otherwise deform significantly in response to loading or pressures from an air flow flowing there over, including reverse wind conditions as described herein. It is appreciated that a more rigid separated flow inducer 34 will likely provide a greater degree of separated flow about at least one of the surfaces 40, 42 when in the second (deployed) position 48. In certain embodiments, the separated flow inducer 34 is formed from a suitable rigid material, such as a metallic material, e.g., stainless steel, or a rigid polymeric material. In other embodiments, the separated flow inducer 34 is formed from a material having a degree of deformability or flexibility, but is of such a thickness, width, length and/or shape that the separated flow inducer 34 does not significantly compress, flex, or otherwise deform.

It is appreciated by one skilled in the art that the typical shape of an airfoil of a wind turbine blade is such that the trailing edge 28 may create a small amount of flow separation about the surfaces 40, 42 from the trailing edge 28 during reverse wind events. However, this amount of flow separation, if present, is small and is usually less than 10%, and more typically, less than 5% of a length of a chord line 44 starting from the trailing edge 28. It is further appreciated that the extent of flow separation may also be dependent upon the inflow angle of the wind. As used herein, the term "baseline flow separation" contemplates these principles and refers to the degree of flow separation, whether none or a small amount, which is created by the trailing edge of a blade alone without an embodiment of a reverse load mitigation device as described herein during reverse wind events.

When the separated flow inducer 34 is in the second (deployed) position 48 shown in FIG. 2B, the separated flow inducer 34 is effective to induce a greater amount of flow separation 50 along a respective one of surfaces 40, 42 relative to the baseline flow separation. In certain embodiments, the degree of flow separation created by a separated flow inducer 34 as described herein is at least about two times the amount of flow separation attributable to a baseline flow separation (the flow separation that would occur naturally with a corresponding blade under the same inflow conditions without the separated flow inducer). In further embodiments, the separated flow inducer 34 is effective to induce at least about four times the amount of flow separation over at least one of the surfaces 40, 42 relative to the flow separation induced by the trailing edge 28 alone. In still further embodiments, the separated flow inducer 34 is effective to induce at least ten times the amount of flow separation over at least one of the surfaces 40, 42 relative to the flow separation induced by the trailing edge 28 alone. In an embodiment, the above-described relative comparisons of the flow separation with and without the flow inducer 34 are based on the distance up the chord line 44 from the trailing edge 28 that flow separation occurs.

In other embodiments, the separated flow inducer 34 is effective to induce flow separation 50 over at least one of the surfaces 40, 42 for a distance from the trailing edge 28 that is at least about 20% of a length of the chord line 44 when in the deployed position 48. In still another embodiment, the separated flow inducer 34 is effective to induce flow separation 50 over at least one of the surfaces 40, 42 for a distance from the trailing edge 28 that is at least about 25% of a length of the chord line 44 when in the deployed position 48. In still another embodiment, the separated flow inducer 34 is configured to induce flow separation 50 over at least one of the surfaces 40, 42 for a distance from the trailing edge 28 that is at least about 50% of a length of the chord line 48 when in the deployed position 48. In still another embodiment, the separated flow inducer 34 is configured to induce flow separation 50 over an entire length of at least one of the surfaces 40, 42 when in the deployed position 48. In any of the embodiments, the increased flow separation over the surfaces 40,42 (relative to the flow separation, if any, created by the trailing edge 28) significantly reduces aerodynamic loads on the blade 20 during reverse flow conditions.

As used herein, the term "deployed" does not imply that the separated flow inducer 34 must complete its full range of motion. It is appreciated, however, that by "deployed" it is meant that the separated flow inducer 34 will travel through at least a range of motion from the first (deactivated) position 46 to the second (deployed) position 48 sufficient to create the desired amount of flow separation 50. In certain embodiments, the separated flow inducer 34 is in the first position 46 when it is generally aligned with the trailing-edge departure angle (the average angle of the two surfaces 40 and 42 at the trailing edge 28). Typically, the greater the extent to which the separated flow inducer 34 travels through its range of motion, generally, the more flow separation that is induced over one of the respective surfaces 40, 42. In one embodiment, as shown in FIG. 5, the separated flow inducer 34 is configured to pivot at least about 75 degrees from the first (deactivated) position 46 to the second (deployed) position 48. In another embodiment, as shown in FIG. 6, the separated flow inducer 34 is configured to pivot about 90 degrees from the first (deactivated) position 46 to the second (deployed) position. By "about" as used herein, it is meant a value that is ± 5 % of the stated value.

Typically, the separated flow inducer 34 is configured to passively pivot about or with the hinge member 34 and trailing edge 28 from a deactivated position 46 to a deployed position 48 in response to air flow 42 coming from a trailing edge. It is understood, however, that the present invention is not so limited. In other embodiments, the separated flow inducer 34 may be actively moved from the first position 46 to the second position, such as via any suitable actuating mechanism known in the art. Exemplary actuating mechanisms include pneumatic, piezoelectric, or other mechanical actuating mechanisms as are known in the art.

Depending on wind speed and direction, in certain embodiments, the separated flow inducer 34 may pivot in the direction of either the first surface 40 or the second surface 42. In some embodiments, however, it may be desirable to limit motion of the separated flow inducer 34 in one direction only. This may be accomplished by providing a stop member associated with the hinge member 32 or at least one of the surfaces 40, 42. The stop member may be directly or indirectly associated with the hinge member 32 or the blade 20 by any suitable structure, such as adhesive, heat sealing, fusing, fasteners, e.g., nuts and bolts, and the like, or by manufacturing the stop member with a portion of the blade 20 or the hinge member 32. As shown in FIG. 7, for example, there is provided a stop member 54 associated with the second surface 42 that will prevent the separated flow inducer 34 from pivoting toward the second surface 42. Instead, the separated flow inducer 34 will be limited to pivoting toward the first surface only 40. Limiting the separated flow inducer to movement in one direction only may be preferred when the separated flow inducer 34 is expected to move in only that direction. This will prevent the possibility, however remote, that the separated flow inducer 34 would get stuck in a deployed position in the opposite direction.

In certain embodiments, the hinge member 34 may further comprise a vibrational damping structure associated therewith as is known in the art for reducing any vibration or other undesired motion associated with the operation of the device 30. Such a structure will reduce vibrational motion of the hinge member 32 and the separated flow inducer 34 causing unwanted air flow disturbances when air flow travels over the device from the leading edge in the first position, which is typical during normal operation of the wind turbine 10. In one embodiment, the hinge member 32 itself is configured to dampen motion of the device as the hinge member 32 and/or separated flow inducer 34 moves from the first position 46 to the second position 48 as may be the case with one or more of the spring, friction, or damping hinges described above. In a particular embodiment, the hinge member instead comprises or also includes one or more materials having vibrational absorption properties, such as rubber, polytetrafluoroethylene, polyurethane, a polypropylene/butyl rubber blend, or the like. For example, when the hinge member 32 is formed from an elastomeric material, the elastomeric material may be one that is effective to dampen an amount of motion of the device 30 in operation. In still other embodiments, the hinge member 32 may comprise one or more support members formed from such vibrational absorption properties. Still further, an active vibration damping system may be associated with the hinge member 32. For example, a system having one or more piezoelectric devices may be utilized to suppress vibration in real time, such as is described in U.S. Patent No. 6,520,678, the entirety of which is incorporated by reference herein.

In other embodiments, as shown in FIG. 9, the separated flow inducer 34 may comprise or further include a noise reduction structure 58, e.g., trailing edge brushes 60, as is known in the art. Exemplary noise reduction structures include, but are not limited to serrations, brushes, feathers, and the like. Trailing edge brushes typically comprise a plurality of bristles and are attached such that they protrude away from the trailing edge 28 and the blade body 36. Serrated panels typically include a plurality of spaced apart, saw tooth-like teeth having a predetermined size and shape. Any one or more of these noise reduction structures may be associated with the separated flow inducer 34 and/or to the blade body at or in the vicinity of the trailing edge 28 via any suitable structure or process known in the art, such as an adhesive, heat sealing, fusing, fasteners, e.g., nuts and bolts, and the like. It is appreciated that when a noise reduction member 58 is incorporated within the passive load mitigation device 30 as described herein, the noise reduction member 58 may advantageously create further flow separation 50 along one of the surfaces 40, 42 when the separated flow inducer 34 is in the second (deployed) position 48, as well as provide its noise reduction benefits. Exemplary noise reduction structures are disclosed in U.S. Published Patent Application Nos. 20080166241 and 20070077150, and U.S. Patent No. 7,059,833, the entirety of each of which is hereby incorporated by reference.

In another aspect, as shown in FIG. 9, there is provided another embodiment of a reverse wind load mitigation device 30b comprising a hinge member 32 and a separated flow inducer 34b that may be configured as described herein, but also comprises a plurality of segments 56, each of which is capable of pivoting independently of other segments. In this way, the plurality of segments 46 may differentially pivot from the first position 46 to the second position 48 to induce differing amounts of flow separation 50 along a span-wise length of the blade 20 based upon where load mitigation from reverse wind conditions is most needed along the blade 20.

In accordance with another aspect, there is provided a process for reducing loads during reverse flow conditions of a wind turbine blade 20 comprising a leading edge 26 and a trailing edge 28 with opposed pressure and suction surfaces 40, 42 extending there between and a chord line 44 extending between the leading edge 26 and the trailing edge 28. The process comprises inducing an amount of flow separation 50 over at least one of the surfaces 40, 42 by providing any embodiment of a separated flow inducer 34 as described herein at the trailing edge 28 that passively pivots toward at least one of the surfaces 40, 42 in response to wind traveling from a direction of the trailing edge 28. It is appreciated that any description applicable to one embodiment as described herein may be applicable and incorporated into any other embodiment described herein.

While various embodiments of the present invention have been shown and described herein, it will be obvious that such embodiments are provided by way of example only. Numerous variations, changes and substitutions may be made without departing from the invention herein. Accordingly, it is intended that the invention be limited only by the spirit and scope of the appended claims.

## Claims

1. A wind turbine blade comprising:
a blade body comprising a leading edge and a trailing edge with opposed pressure and suction surfaces extending there between defining an airfoil shape in cross-section and a chord line extending between the trailing edge and leading edge;
a hinge member attachable to the trailing edge; and
a rigid separated flow inducer associated with the hinge member, the rigid separated flow inducer configured to passively pivot about or with the hinge member toward at least one of the surfaces in response to wind traveling from a direction of the trailing edge;
wherein the rigid separated flow inducer is effective to induce flow separation over at least one of the surfaces for a distance from the trailing edge.

2. The wind turbine blade of claim 1, wherein the separated flow inducer comprises a flap.

3. The wind turbine blade of claim 1, wherein the hinge member comprises a member from the group consisting of a friction hinge, a damping hinge, and a spring-loaded hinge.

4. The wind turbine blade of claim 1, wherein the hinge member comprises an elastomeric material.

5. The wind turbine blade of claim 1, wherein the separated flow inducer is configured to induce flow separation over at least one of the surfaces for a distance from the trailing edge that is at least about 20% of a length of the chord line.

6. The wind turbine blade of claim 1, wherein the separated flow inducer is configured to induce flow separation over an entire length of at least one of the surfaces.

7. The wind turbine blade of claim 1, further comprising a stop member configured to limit movement of the separated flow inducer toward only one of the suction surface and the pressure surface.

8. The wind turbine blade of claim 1, further comprising a noise reduction structure associated with the flow separation inducer.

9. A wind turbine blade comprising:
a blade body comprising a leading edge and a trailing edge with opposed pressure and suction surfaces extending there between defining an airfoil shape in cross-section and a chord line extending between the trailing edge and leading edge;
a hinge member associated with the blade body; and
a separated flow inducer associated with the hinge member, the separated flow inducer configured to pivot about or with the hinge member from a first position to a second position toward at least one of the surfaces in response to wind traveling from a direction of the trailing edge;
wherein the separated flow inducer is effective to induce at least twice the amount of flow separation over at least one of the surfaces relative to flow separation induced by the trailing edge alone in response to the wind.

10. The wind turbine blade of claim 9, wherein the separated flow inducer is configured to pivot at least about 75 degrees from a first position to a second position in response to the wind traveling from a direction of the trailing edge.

11. The wind turbine blade of claim 9, wherein the separated flow inducer is configured to pivot about 90 degrees from a first position to a second position in response to the wind traveling from a direction of the trailing edge.

12. The wind turbine blade of claim 9, wherein the separated flow inducer comprises a flap.

13. The wind turbine blade of claim 9, wherein the flap comprises a plurality of segments.

14. The wind turbine blade of claim 9, further comprising a stop member configured to limit movement of the separated flow inducer toward a selected one of the suction surface and the pressure surface.

15. The wind turbine blade of claim 9, wherein the hinge member comprises a member from the group consisting of a friction hinge, a damping hinge, and a spring-loaded hinge.

16. The wind turbine blade of claim 9, wherein the hinge member comprises an elastomeric material.

17. The wind turbine blade of claim 9, wherein the separated flow inducer is configured to induce flow separation over at least one of the surfaces for a distance from the trailing edge that is at least about 20% of a length of the chord line.

18. The wind turbine blade of claim 9, wherein the separated flow inducer is configured to induce flow separation over an entire length of at least one of the surfaces.

19. A wind turbine blade comprising:
a blade body comprising a leading edge and a trailing edge with opposed pressure and suction surfaces extending there between defining an airfoil shape in cross-section and a chord line extending between the trailing edge and leading edge;
a hinge member attachable to the trailing edge; and
a separated flow inducer associated with the hinge member, the separated flow inducer configured to pivot about or with the hinge member toward at least one of the surfaces in response to wind traveling from a direction of the trailing edge;
wherein the separated flow inducer is effective to induce flow separation over at least one of the surfaces for a distance from the trailing edge that is at least about 20% of a length of the chord line.

20. The wind turbine blade of claim 19, wherein the separated flow inducer is effective to induce flow separation over at least one of the surfaces for a distance from the trailing edge that is at least about 50% of a length of the chord line.
